# EUROPÄISCHE PATENTSCHRIFT

(11) **EP 2 996 524 B1**
(45) Veröffentlichungstag und Bekanntmachung des Hinweises auf die Patenterteilung: **08.02.2017**
(21) Anmeldenummer: 15733640.5
(22) Anmeldetag: 10.06.2015
(51) Int. Cl.: A47J 31/54, A47J 31/46

(54) **GETRÄNKEZUBEREITUNGSVORRICHTUNG SOWIE BETRIEBSVERFAHREN**
BEVERAGE PREPARATION DEVICE AND OPERATING METHOD
DISPOSITIF DE PRÉPARATION DE BOISSONS AINSI QUE PROCÉDÉ DE FONCTIONNEMENT

(30) Priorität: 16.06.2014 DE 102014108415
(43) Veröffentlichungstag der Anmeldung: 23.03.2016
(73) Patentinhaber: Eugster/Frismag AG, 8580 Amriswil (CH)
(72) Erfinder: RIESSBECK, Wolfgang, 8597 Landschlacht (CH); WÄGER, Simon, 8580 Amriswil (CH)
(74) Vertreter: Wagner, Kilian
(86) Internationale Anmeldenummer: PCT/EP2015/062921
(87) Internationale Veröffentlichungsnummer: WO 2015/193148

(56) Entgegenhaltungen:
- EP-A1- 2 612 577
- WO-A1-2007/134476
- DE-A1-102010 007 143

## Beschreibung

Die Erfindung betrifft eine Getränkezubereitungsvorrichtung, insbesondere eine Kaffeemaschine, noch weiter bevorzugt einen Kaffeevollautomaten gemäß dem Oberbegriff des Anspruchs 1 mit mindestens einer Wasserpumpe zum Zuführen von Wasser zu einem zum Erzeugen von Heißwasser ausgebildeten ersten Durchlauferhitzer und zu einem ebenfalls zum Erzeugen von Heißwasser und/oder zum Erzeugen von dampfausgebildeten zweiten Durchlauferhitzer, und mit einer Steuereinheit zum Ansteuern der mindestens einen Pumpe sowie der Durchlauferhitzer, insbesondere auf eine Benutzervorgabe hin und/oder im Rahmen einer automatischen Ablaufsteuerung zur Realisierung unterschiedlicher Betriebsmodi. Ferner betrifft die Erfindung ein Verfahren zum Betreiben einer Getränkezubereitungsvorrichtung gemäß dem Oberbegriff des Anspruchs 15.

Aus der EP 2 019 614 B1 ist eine Getränkezubereitungsvorrichtung bekannt, die zwei Durchlauferhitzer umfasst, die jeweils zwischen Heißwassererzeugung und Dampferzeugung umschaltbar sind, wobei die Durchlauferhitzer einander zuschaltbar sind, um auf diese Weise alternativ eine große Menge Heißwasser oder eine große Menge Dampf erzeugen zu können. Zum Zwecke des einander Zuschaltens sind den Durchlauferhitzern separate Magnetventile zugeordnet. Nachteilig bei der bekannten Vorrichtung ist deren komplexer Aufbau und die Vielzahl von notwendigen Kabeln zum Ansteuern der Magnetventilaktuatoren. Darüber hinaus ist der Funktionsumfang im Hinblick auf die Kombination bzw. Zusammenschaltung der Durchlauferhitzer beschränkt.

Die DE 195 03 618 C1 beschreibt ein Wasserabgabeventil für Heißgetränkeautomaten, bei dem zwei Eingänge mit einem gemeinsamen Ausgang verbunden sind.

Die EP 2 612 577 A1 beschreibt eine Getränkezubereitungsvorrichtung bei der zwei Durchlauferhitzer mit separaten Eingängen eines Mehrwegeventils verbunden sind.

Ausgehend von dem vorgenannten Stand der Technik liegt der Erfindung die Aufgabe zugrunde, eine hinsichtlich ihres Aufbau vereinfachte und damit bevorzugt kostengünstigere Getränkezubereitungsvorrichtung mit zwei Durchlauferhitzern anzugeben, deren Funktionalität bevorzugt verglichen mit dem Stand der Technik erhöht ist, insbesondere auch bei einem fakultativen Einsatz von nicht zwischen einer Dampferzeugungsfunktion und einer Heißwassererzeugerfunktion umschaltbaren Durchlauferhitzern, also Durchlauferhitzern die jeweils nur eine Funktionalität aufweisen.

Ferner besteht die Aufgabe darin ein verbessertes Betriebsverfahren anzugeben, welches eine erhöhte Funktionalität ermöglicht.

Diese Aufgabe wird hinsichtlich der Getränkezubereitungsvorrichtung mit den Merkmalen des Anspruchs 1 und hinsichtlich des Betriebsverfahrens mit den Merkmalen des Anspruchs 15 gelöst. Vorteilhafte Weiterbildungen der Erfindung sind in den Unteransprüchen angegeben.

Erfindungsgemäß ist vorgesehen, dass der erste Durchlauferhitzer über eine erste Verbindungsleitung mit einem ersten Eingang eines Mehrwegeventils und der zweite Durchlauferhitzer über eine zweite Verbindungsleitung mit einem zweiten, d.h. einem anderen Eingang desselben Mehrwegeventils verbunden ist, und dass das Mehrwegeventil derart ausgebildet ist, dass in einer ersten Schaltstellung der erste Eingang mit einem ersten Ausgang und der zweite Eingang mit einem (anderen) zweiten Ausgang fluidleitend verbunden ist und in einer zweiten Schaltstellung sowohl der erste Eingang als auch der zweite Eingang fluidleitend mit einem gemeinsamen Ausgang verbunden sind. Anders ausgedrückt sind in der ersten Schaltstellung die beiden Eingänge mit separaten Ausgängen verbunden und in der zweiten Schaltstellung mit einem gemeinsamen Ausgang, so dass im letztgenannten Fall sich die über die beiden Eingänge zugeführten Fluidströme addieren. Mit der erfindungsgemäßen Getränkezubereitungsvorrichtung ist es möglich, mit einem einzigen Mehrwegeventil, insbesondere einem Scheibenventil, die zwei Durchlauferhitzer zusammenzuschalten, so dass auf das Vorsehen separater Ventile wie im Stand der Technik und damit auch auf die notwendige Verkabelung verzichtet werden kann.

Bevorzugt umfasst das Mehrwegeventil mehr als nur zwei Eingänge und/oder mehr als zwei Ausgänge, so dass eine Vielzahl von Verschaltungsmöglichkeiten gegeben sind, um die Durchlauferhitzer mit unterschiedlichen Verbrauchern, insbesondere gleichzeitig mit ausschließlich zwei Verbrauchern oder gleichzeitig mit mehr als zwei Verbrauchern oder alternativ mit einem gemeinsamen Verbraucher fluidleitend verbinden zu können, ohne dass es hierfür wie im Stand der Technik notwendig wäre, weitere separate Ventile vorzusehen. Bevorzugt weist das erfindungsgemäß zur Anwendung kommende Mehrwegeventil neben den Schaltmöglichkeiten im Hinblick auf die Durchlauferhitzer mindestens eine weitere Funktion, bevorzugt mehrere weitere Funktionen auf, beispielsweise zur Ansaugung von Luft zum Herstellen von Milchschaum und/oder zum Spülen und/oder Ausdampfen verschiedener Leitungen, beispielsweise auch einer Luftleitung oder einer Milchleitung.

Von seinem grundsätzlichen Aufbau her kann als Mehrwegeventil bei einer nach dem Konzept der Erfindung ausgebildeten Getränkezubereitungsvorrichtung ein Mehrwegeventil realisiert werden, wie dies in dem europäischen Patent EP 1 300 105 B1 der Anmelderin beschrieben ist, wobei selbstverständlich zwei separate Eingänge für die beiden Durchlauferhitzer vorgesehen werden müssen, und wobei mittels des Mehrwegeventils die Fluidströme der Durchlauferhitzer zusammengeschaltet bzw. zusammengelegt und in einer anderen Schaltstellung separat voneinander, insbesondere zu unterschiedlichen Verbrauchern geführt werden können. Bevorzugt ist mit dem zur Anwendung kommenden Mehrwegeventil auch eine Reinigungsfunktion zum Reinigen einer vorzugsweise vorgesehenen Aufschäumeinrichtung und/oder einer Milchansaugleitung realisiert, wie dies in dem Deutschen Patent DE 10 2010 007 143 B4 der Anmelderin beschrieben ist, wobei für die entsprechende Funktion entweder beide Durchlauferhitzer mit dem Mehrwegeventil zusammengeschaltet werden oder nur einzeln betrieben werden oder gleichzeitig und die Fluidströme zu separaten Leitungen und/oder Verbrauchern geleitet werden.

Die erfindungsgemäße Getränkezubereitungsvorrichtung macht es zudem nicht notwendig, dass zwingend einer oder beide Durchlauferhitzer zwischen Heißwassererzeugung und Dampferzeugung umschaltbar sein müssen, um einen größeren Volumenstrom Heißwasser erzeugen zu können, was selbstverständlich auch denkbar und im Rahmen von Weiterbildungen der Erfindung vorgesehen ist. So bietet, wie später noch im Detail erläutert werden wird, gemäß einer bevorzugten weiterbildungsgemäßen Ausgestaltung der Erfindung die Getränkezubereitungsvorrichtung die Möglichkeit, auch eine größere Heißwassermenge bereitzustellen, als dies mit nur einem einzigen Durchlauferhitzer möglich wäre, wenn einer der Durchlauferhitzer ausschließlich zur Heißwasserbereitung ausgebildet ist und der andere Durchlauferhitzer ausschließlich zur Dampferzeugung ausgebildet ist. Hierzu muss mittels des Mehrwegeventils der von dem einen Durchlauferhitzer erzeugte Dampf zu dem von dem anderen Durchlauferhitzer erzeugten Heißwasser zugeführt werden. Da der Heißwasser-Durchlauferhitzer in diesem Fall mit einem größeren Wasservolumenstrom beschickt werden kann, als dies üblicherweise zum Erreichen einer bestimmten Heißwassertemperatur möglich wäre, und die Temperaturdifferenz zum Erreichen der gewünschten Heißwassertemperatur durch die Dampfzuleitung erreicht wird, kann auf überraschend einfache Weise ein größerer Heißwasservolumenstrom realisiert werden, als dies mit nur einem Durchlauferhitzer (aufgrund der begrenzten Heizleistung) möglich wäre. Anders ausgedrückt ist es möglich, den ersten, nur für den Heißwasserbetrieb ausgebildeten, d.h. konfigurierten bzw. angesteuerten Durchlauferhitzer mit einer höher als der normal üblichen Wasserdurchflussrate zu betreiben. Durch die erhöhte Durchflussrate wird aufgrund der begrenzten Maximalleistung des Durchlauferhitzers eine tiefere Wassertemperatur als üblich bzw. gewollt erreicht. Zur Erhöhung der Wassertemperatur auf die gewünschte Temperatur wird dann, insbesondere im Mehrwegeventil Dampf des zweiten, vorzugsweise ausschließlich zur Dampferzeugung ausgebildeten, d.h. konfigurierten bzw. angesteuerten Durchlauferhitzer beigemischt. Ganz besonders bevorzugt ist es, wenn sich die beiden Durchlauferhitzer hinsichtlich ihrer Heizleistung, insbesondere um mindestens 100W unterscheiden.

Realisierbar ist es alternativ auch, dass zumindest einer der Durchlauferhitzer, oder ausschließlich einer der Durchlauferhitzer oder beide Durchlauferhitzer zur Realisierung einer Funktionalität, d.h. Wassererzeugung oder Dampferzeugung ausgebildet, d.h. konfiguriert bzw. angesteuert sind. Das Merkmal, dass ein Durchlauferhitzer zur Erzeugung von Heißwasser bzw. Dampf ausgebildet ist bedeutet, dass die Förderleistung der mindestens einen Pumpe (insbesondere durch eine entsprechende Leistungsvorgabe der Pumpe durch die Steuermittel und/oder die Zuschaltung oder Abschaltung einer weiteren Pumpe durch die Steuermittel) so auf die Heizleistung des Durchlauferhitzers abgestimmt ist, dass das entsprechende Produkt, Heißwasser bzw. Dampf resultiert.

Ganz besonders bevorzugt sind unterschiedliche Betriebsmodi der Getränkezubereitungsvorrichtung vom Benutzer, bevorzugt entweder über eine Menüführung oder über einfach belegte Knöpfe (sogenannte onetouch-Bedienung) vorgebbar. Weiter bevorzugt sind mindestens zwei der folgenden Betriebsmodi durch den Benutzer wählbar und durch die Getränkezubereitungsvorrichtung ausführbar: Kaffeeproduktion; Produktion heißer Milch (ohne Schaum); Produktion von Milchschaum; Heißwasser-Normalbezug; insbesondere mit einer Pumpe und mit einem Durchlauferhitzer; Vielheißwasserbezug, insbesondere mit zwei Pumpen und/oder zwei Durchlauferhitzern, die entweder beide Heißwasser produzieren oder alternativ ein Durchlauferhitzer Heißwasser und einer Dampf produziert, wobei dann Dampf und Heißwasser vermischt werden; gleichzeitige Kaffeeproduktion und Produktion heißer Milch; gleichzeitige Kaffeeproduktion und Produktion von Milchschaum; gleichzeitige Kaffeeproduktion und Produktion von Heißwasser.

In Weiterbildung der Erfindung ist gemäß einer ersten Alternative vorgesehen, dass der gemeinsame Ausgang, auf welchen der erste und der zweite Eingang zusammengeführt werden, einer der vorzugsweise zwei, separaten Ausgänge ist, die in der zweiten Schaltstellung des Mehrwegeventils von dem ersten und zweiten Eingang versorgt werden. Gemäß einer alternativen Ausgestaltung ist vorgesehen, dass der gemeinsame Ausgang von einem zusätzlich zu den, vorzugsweise zwei, separaten Ausgängen vorgesehenen Ausgang gebildet ist, der sich noch weiter bevorzugt durch einen größeren Strömungsquerschnitt als die jeweiligen separaten Ausgänge auszeichnet, was jedoch nicht zwingend notwendig ist, insbesondere wenn eine Fluidgeschwindigkeitserhöhung in Kauf genommen werden kann.

Besonders zweckmäßig ist es, wie eingangs bereits erwähnt, wenn das im Rahmen der Erfindung zur Anwendung kommende Mehrwegeventil als Scheibenventil ausgebildet ist, umfassend zwei relativ zueinander verdrehbare Scheiben, wobei die relative Rotationsposition die jeweilige Schaltstellung vorgibt. Bevorzugt ist zum Rotieren einer der Scheiben des Ventils ein Elektromotor, insbesondere ein Schrittmotor vorgesehen. Besonders bevorzugt ist eine Ausführungsform des Mehrwegeventils als Keramikventil, d.h. mit aus einer Keramik ausgebildeten Ventilscheiben.

Wie ebenfalls eingangs bereits erläutert, weist in Weiterbildung der Erfindung das Mehrwegeventil nicht nur den ersten und den zweiten Eingang zur Versorgung des Mehrwegeventils mit den von den Durchlauferhitzern stammenden Fluiden auf, sondern umfasst mindestens einen weiteren Eingang, insbesondere einen Lufteingang zum Ansaugen von Luft in eine Schaltstellung bzw. in einem Betriebsmodus für die Herstellung von Milchschaum für Spezialgetränke, wie Cappuccino oder Latte macchiato. Alternativ oder vorzugsweise zusätzlich ist vorgesehen, dass neben den separaten Ausgängen und/oder dem gemeinsamen Ausgang mindestens ein weiterer Ausgang vorgesehen ist, insbesondere zur Weiterleitung von Luft an eine fakultative Milchaufschäumeinrichtung der Getränkezubereitungsvorrichtung, wobei es noch weiter bevorzugt ist, wenn in einer Schaltstellung bzw. in einem Betriebsmodus zu Spülzwecken oder zu Ausdampfzwecken der erste und/oder der zweite Eingang mit dem weiteren Ausgang, insbesondere einem Luftausgang verbunden ist, um auf diese Weise diesen Ausgang und eine damit verbundene Leitung, insbesondere eine Luftleitung und/oder eine mit der Luftleitung verbundene Milchansaugleitung zu spülen oder auszudampfen. Aufgrund des Vorsehens eines derartigen multifunktionalen Mehrwegeventils können die Durchlauferhitzer ohne die Notwendigkeit des Vorsehens separater zusätzlicher Ventile unterschiedlichste Funktionalitäten übernehmen.

Besonders zweckmäßig ist eine Ausführungsform, bei der die erste und/oder die zweite Verbindungsleitung zur fluidleitenden Verbindung eines Durchlauferhitzers mit dem Mehrwegeventil abzweigungsfrei sind/ist. Derartige Abzweigungen sind bei einer erfindungsgemäßen Getränkezubereitungsvorrichtung im Gegensatz zum Stand der Technik nicht notwendig, da, vorzugsweise die gesamte Ventilmimik von einem gemeinsamen Mehrwegeventil übernommen wird. Gemäß einer alternativen Ausgestaltung ist vorgesehen, dass zumindest eine, vorzugsweise ausschließlich eine der Verbindungsleitungen eine einzige Abzweigung, insbesondere zu einer Brüheinheit zum Auslaugen von Kaffeepulver, bevorzugt über ein Überdruckventil, aufweist.

Im Hinblick auf die Ausgestaltung der Durchlauferhitzer gibt es unterschiedliche Möglichkeiten. So ist es, wie erwähnt, möglich, dass zumindest einer der Durchlauferhitzer, vorzugsweise beide Durchlauferhitzer nur für eine einzige Funktionalität ausgebildet, d.h. konfiguriert bzw. angesteuert sind, d.h. ausgebildet sind zur ausschließlichen Erzeugung von entweder Heißwasser oder von Dampf. Alternativ ist es möglich, dass zumindest einer der Durchlauferhitzer oder beide Durchlauferhitzer zwischen einem Dampferzeugungsmodus und einem Heißwassererzeugungsmodus umschaltbar sind, was durch eine entsprechende Bestromung und/oder die Anpassung der dem Durchlauferhitzer zugeordneten Pumpe möglich ist.

Grundsätzlich ist es möglich, beide Durchlauferhitzer mit einer einzigen Pumpe mit Wasser zu versorgen. Bevorzugt ist eine Ausführungsform, bei der jedem Durchlauferhitzer eine eigene Pumpe zugeordnet ist, um dem jeweiligen Durchlauferhitzer Wasser zur Erzeugung von Heißwasser oder Dampf zuzuleiten.

In Weiterbildung der Erfindung ist mit Vorteil vorgesehen, dass in mindestens einem sogenannten Vielheißwasser-Betriebsmodus beide Durchlauferhitzer gleichzeitig mit Wasser zur jeweiligen Erzeugung von Heißwasser versorgt werden, insbesondere über jeweils eine Pumpe. Vielheißwasser bedeutet hierbei, dass im Vergleich zu der Versorgung nur eines Durchlauferhitzers mit Wasser durch das gleichzeitige Betreiben eines weiteren Durchlauferhitzers, vorzugsweise mit eigener zugeordneter Pumpe eine größere Wassermenge bereitgestellt werden kann. Alternativ ist es bei einer Ausführungsform mit nur einer Pumpe möglich, diese im Vielheißwasser-Betriebsmodus mit einer größeren Förderleistung zu betreiben als in einem (Normal-) Heißwasser-Betriebsmodus. Unabhängig davon, wie der größere Volumenstrom erzeugt wird (zwei Pumpen oder eine Pumpe mit höherer Förderleistung) ist es gemäß einer ersten Alternative möglich, die Heißwasservolumenströme mit dem Mehrwegeventil zusammenzuführen oder gemäß einer zweiten Alternative an separate Ausgänge zu verteilen, insbesondere gleichzeitig an ausschließlich zwei Ausgänge oder alternativ an mindestens drei Ausgänge.

So ist es bei der vorgenannten, ersten Alternative durch die Zusammenführung der Fluidströme vom ersten und zweiten Eingang möglich, einen gemeinsamen Verbraucher, beispielsweise einen Wasserbezugshahn (Zapf- bzw. Bezugsstelle), insbesondere zur Herstellung von Americano-Kaffee mit dem größeren Heißwasservolumenstrom zu versorgen und/oder in dem alternativen Vielheißwasser-Betriebsmodus, bei dem die Heißwasservolumenströme mittels des Mehrwegeventils auf separate Ausgänge verteilt werden, gleichzeitig mindestens zwei unterschiedliche Verbraucher, beispielsweise gleichzeitig zwei Brüheinheiten oder gleichzeitig eine Brüheinheit und einen Wasserbezugshahn.

Besonders bevorzugt ist mit der Getränkezubereitungsvorrichtung ein Heißwasser-Betriebsmodus realisierbar, bei dem der erste und der zweite Eingang des Mehrwegeventils entweder mit dem gemeinsamen Ausgang des Mehrwegeventils oder mit separaten Ausgängen verbunden sind und in dem mittels des ersten Durchlauferhitzers Heißwasser erzeugbar ist, wobei der erste Durchlauferhitzer vorzugsweise, jedoch nicht zwingend ausschließlich zur Heißwassererzeugung, d.h. nicht zur Dampferzeugung ausgebildet ist. Gleichzeitig ist mit dem zweiten Durchlauferhitzer Dampf erzeugbar, wobei der zweite Durchlauferhitzer vorzugsweise ausschließlich zur Dampferzeugung ausgebildet ist oder alternativ zwischen Heißwassererzeugung und Dampferzeugung umschaltbar ist. In dem Heißwasser-Betriebsmodus wird mittels des Mehrwegeventils, vorzugsweise im Mehrwegeventil selbst, dem von dem ersten Durchlauferhitzer erzeugten Heißwasserstrom der von dem zweiten Durchlauferhitzer erzeugte Dampf zugeführt, um somit die gewünschte Endtemperatur zu erreichen. Ganz besonders bevorzugt wird während dieses HeißwasserBetriebsmodus der erste Durchlauferhitzer mit einem größeren Wasservolumenstrom versorgt, als in einem Normal-Heiß-wassermodus. Dies wird bevorzugt dadurch realisiert, dass eine dem ersten Durchlauferhitzer zugeordnete Pumpe mit einer höheren Förderleistung betrieben als in dem Normal-Heißwassermodus, in welchem in dem von dem ersten Durchlauferhitzer erhitzen Heißwasser nicht zusätzlich Dampf von dem zweiten Durchlauferhitzer zugeführt wird. Vorgenannter Heißwasser-Betriebsmodus ermöglicht die Herstellung eines vergleichsweise großen Volumenstroms an Heißwasser, auch wenn gleichzeitig nur mit einem der Durchlauferhitzer unmittelbar Heißwasser erzeugt wird und mit dem anderen Durchlauferhitzer Dampf. Die Realisierung dieses Heißwasser-Betriebsmodus ermöglicht es zudem, einfach konfigurierte bzw. ausgebildete Durchlauferhitzer einzusetzen, also einen ersten Durchlauferhitzer der ausschließlich zur Heißwassererzeugung ausgebildet bzw. ansteuerbar ist und einen zweiten Durchlauferhitzer, der ausschließlich zur Erzeugung von Dampf ausgebildet, d.h. ansteuerbar ist.

Ganz besonders bevorzugt ist mit der Getränkezubereitungsvorrichtung ein kombinierter Dampf- und Heißwasserbetriebsmodus realisierbar, in dem der erste und der zweite Eingang des Mehrwegeventils mit separaten Ausgängen verbunden sind und in dem mit dem ersten Durchlauferhitzer Heißwasser und mit dem zweiten Durchlauferhitzer Dampf erzeugbar ist, um gleichzeitig einen ersten Verbraucher, insbesondere eine Brüheinheit oder einen Wasserbezugshahn mit Heißwasser und einen weiteren (anderen) zweiten Verbraucher, insbesondere eine Aufschäumvorrichtung für Milch, mit Dampf zu versorgen.

Die Erfindung führt auch auf ein Verfahren zum Betreiben einer Getränkezubereitungsvorrichtung, vorzugsweise einer wie zuvor beschrieben ausgebildeten Getränkezubereitungsvorrichtung. Kern des Verfahrens ist es, dass ein erster und ein zweiter Durchlauferhitzer mit einer gemeinsamen Wasserpumpe oder mit separaten Wasserpumpen mit Wasser versorgt werden, um dieses zur Erzeugung von Heißwasser oder Dampf mit den Durchlauferhitzern zu erhitzen. Erfindungsgemäß ist vorgesehen, dass die Durchlauferhitzer mit separaten Eingängen eines Mehrwegeventils verbunden sind und mit dem Mehrwegeventil in einer ersten Schaltstellung die zum ersten Eingang und zum zweiten Eingang geförderten (zunächst separaten) Fluidströme zusammengeführt, d.h. einem gemeinsamen Ausgang des Mehrwegeventils zugeleitet werden und dann noch weiter bevorzugt in der Folge zu einem gemeinsamen Verbraucher geleitet werden, und dass mit dem Mehrwegeventil in einer zweiten Schaltstellung, insbesondere in einer unterschiedlichen Drehstellung eines als Scheibenventil ausgebildeten Mehrwegeventils, die zum ersten und zweiten Eingang geförderten Fluidströme getrennt voneinander weitergeleitet werden, insbesondere über separate Ausgänge des Mehrwegeventils, vorzugsweise gleichzeitig über ausschließlich zwei oder mehr als zwei Ausgänge, noch weiter bevorzugt zu unterschiedlichen Verbrauchern.

Ganz besonders bevorzugt ist es, wenn in einem Heißwasser-Betriebsmodus der erste und der zweite Eingang des Mehrwegeventils entweder mit separaten Ausgängen oder mit einem gemeinsamen Ausgang des Mehrwegeventils verbunden sind, mit dem vorzugsweise jedoch nicht zwingend ausschließlich zur Heißwassererzeugung ausgebildeten, ersten Durchlauferhitzer Heißwasser erzeugt wird und gleichzeitig mit dem, vorzugsweise ausschließlich zur Dampferzeugung ausgebildeten, zweiten Durchlauferhitzer Dampf erzeugt wird, und dass das von dem ersten Durchlauferhitzer auf eine erste Temperatur erhitze Heißwasser durch Dampfbeimischung, insbesondere in dem Mehrwegeventil, auf eine zweite Temperatur erhitzt wird, die höher ist als die erste Temperatur. Es ist also vorgesehen, dass der Dampf, der vom zweiten Dampferzeuger erzeugt wird dem von dem ersten Durchlauferhitzer stammenden Heißwasser, vorzugsweise im Mehrwegeventil zugemischt wird, um die Temperatur des Heißwassers weiter auf die gewünschte Temperatur zu erhöhen. Dies ermöglicht es in vorteilhafter Weiterbildung die Förderleistung einer dem ersten Durchlauferhitzer zugeordneten Pumpe zur Versorgung des ersten Durchlauferhitzers mit Heißwasser mit einer im Vergleich zu einem normalen Heißwasser-Betriebsmodus, in dem eine Dampfbeimischung nicht erfolgt, erhöhten Förderleistung zu betreiben, wodurch das Wasser nach Durchlaufen des ersten Durchlauferhitzers noch nicht die gewünschte Zieltemperatur aufweist, die dann jedoch durch geschicktes Beimischen des Dampfes des zweiten Durchlauferhitzers erreicht wird.

In Weiterbildung der Erfindung ist vorgesehen, dass in einem ersten Vielheißwasser-Betriebsmodus der erste und der zweite Eingang des Mehrwegeventils mit separaten Ausgängen oder dem gemeinsamen Ausgang des Mehrwegeventils verbunden sind, und ein gemeinsamer Verbraucher, insbesondere ein Heißwasserbezugshahn, mit Heißwasser versorgt wird, und/ oder dass in einem zweiten Vielheißwasser-Betriebsmodus der erste und der zweite Eingang des Mehrwegeventils mit separaten Ausgängen des Mehrwegeventils verbunden sind, und gleichzeitig zwei unterschiedliche Verbraucher, beispielsweise zwei Brüheinheiten oder eine Brüheinheit und einen Heißwasserbezugshahn mit Heißwasser versorgt werden.

In Weiterbildung der Erfindung ist vorgesehen, dass in mindestens einem Heißwasser-Betriebsmodus, in dem der erste und der zweite Eingang des Mehrwegeventils mit separaten Ausgängen oder dem gemeinsamen Ausgang des Mehrwegeventils verbunden sind, mit dem, vorzugsweise ausschließlich zur Heißwassererzeugung ausgebildeten, ersten Durchlauferhitzer Heißwasser erzeugt wird und gleichzeitig mit dem, vorzugsweise ausschließlich zur Dampferzeugung ausgebildeten, zweiten Durchlauferhitzer Dampf erzeugt wird, und dass das von dem ersten Durchlauferhitzer auf eine erste Temperatur erhitze Heißwasser durch Dampfbeimischung, insbesondere in dem Mehrwegventi, auf eine zweite Temperatur erhitzt wird, die höher ist als die erste Temperatur.

In Weiterbildung der Erfindung ist vorgesehen, dass in einem kombinierten Dampf und Heißwassermodus, in dem der erste und der zweite Eingang des Mehrwegeventils mit separaten Ausgängen des Mehrwegeventils verbunden sind, mit dem ersten Durchlauferhitzer Heißwasser und mit dem zweiten Durchlauferhitzer Dampf erzeugt wird und gleichzeitig ein erster Verbraucher, insbesondere eine Brüheinheit oder ein Wasserbezugshahn, mit Heißwasser und ein weiterer, zweiter Verbraucher, insbesondere eine Aufschäumeinrichtung für Milch, mit Dampf versorgt wird.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine bevorzugte Ausgestaltungsvariante einer Getränkezubereitungsvorrichtung, und
- Fig. 2 bis 9:: unterschiedliche Schaltstellungen eines bei einer Getränkezubereitungsvorrichtung gemäß Fig. 1 bevorzugt zur Anwendung kommenden Mehrwegeventils,

In den Figuren sind gleiche Elemente und Elemente mit der gleichen Funktion mit den gleichen Bezugszeichen gekennzeichnet.

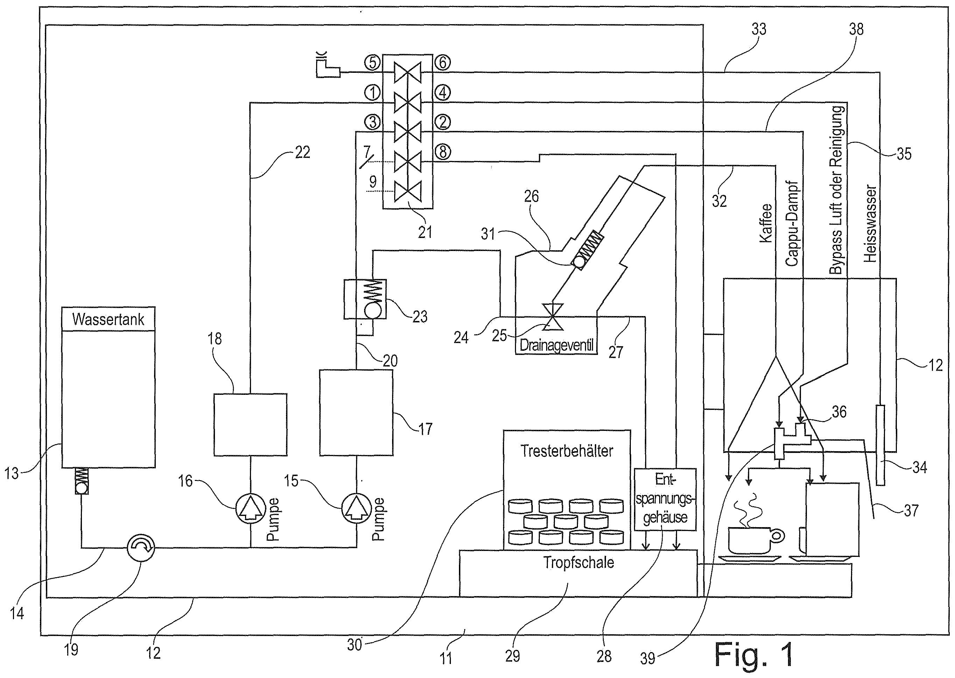

In Fig. 1 ist eine Getränkezubereitungsvorrichtung, hier ein Kaffeevollautomat 1 gezeigt. Dieser umfasst ein Gehäuse 12, an welchem außen eine Ausgabeanordnung 40 mit später noch zu erläuternden, diversen Ausgabemöglichkeiten für Kaffee, Milch, Milchschaum und Heißwasser angeordnet ist.

Die Getränkezubereitungsvorrichtung 11 umfasst einen Wassertank 13 (zusätzlich oder alternativ einen nicht gezeigten nicht gezeigten Festwasseranschluss) als Wasserversorgungsquelle. Von dieser führt jedenfalls eine Wasserleitung 14 hin zu einer ersten Pumpe 15 und einer zweiten Pumpe 16 zum Fördern des Wassers zu einem ersten Durchlauferhitzer 17 (mit der ersten Pumpe 15) und zu einem zweiten Durchlauferhitzer 18 (mit der zweiten Pumpe 16). Die geförderte Wassermenge wird dabei für eine Steuereinheit (nicht gezeigt) mittels eines hier beispielhaft in der Wasserleitung 14 vorgesehenen Durchflussmessers 19 gemessen.

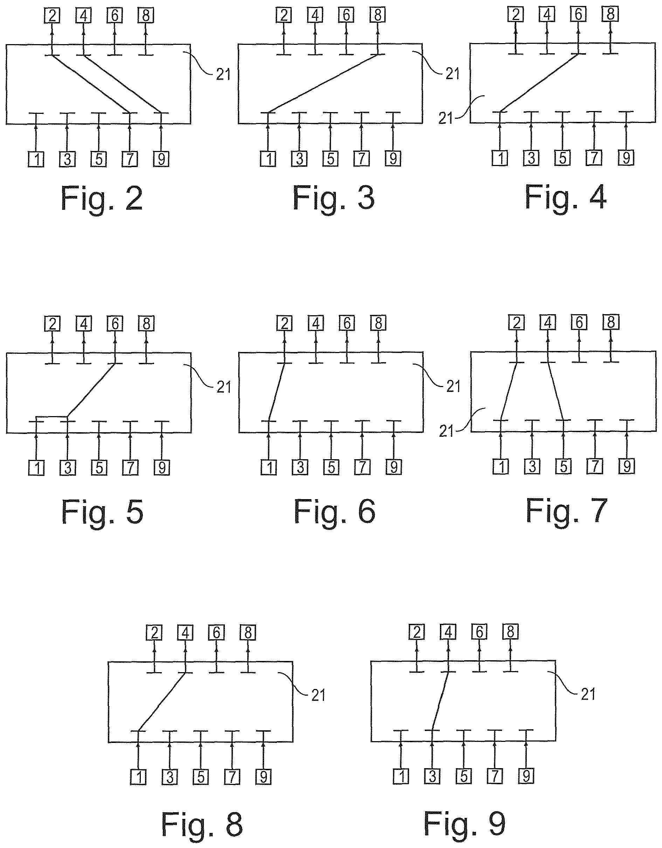

Wie sich aus Fig. 1 ergibt, ist der erste Durchlauferhitzer 17 über eine erste Verbindungsleitung 20 fluidleitend verbunden mit einem ersten Eingang 3 eines als Scheibenventil mit Keramikscheiben ausgebildeten, lediglich schematisch dargestellten Mehrwegeventil 21. Der zweite Durchlauferhitzer 18 ist über eine von der ersten Verbindungsleitung 20 separate bzw. eigenständige zweite Verbindungsleitung 22 mit einem zweiten Eingang 1 des Mehrwegeventils 21 verbunden. Ein dritter Eingang 5 dient zur Luftansaugung. Bei den mit den Bezugszeichen 7 und 9 gekennzeichneten Eingängen handelt es sich um Entlüftungseingänge. Das Mehrwegeventil 21 umfasst mehrere, hier beispielhaft vier mit den Bezugszeichen 2, 4, 6, 8 gekennzeichnete Ausgänge, die in unterschiedlicher Weise mit einem oder mehreren Eingängen fluidleitend verbunden werden können, wie beispielhaft später noch anhand der Figuren 2 bis 9 erläutert werden wird. Dabei entsprechen die Eingänge 1, 3, 5, 7, 9 des Mehrwegeventils gemäß Fig. 1 den gleich bezeichneten Eingängen der Schaltschemata der in den Fig. 2 bis 9. Das gleiche gilt für die Ausgänge entsprechend.

Wie sich aus Fig. 1 ergibt, ist die zweite Verbindungsleitung 22 abzweigungsfrei. Die erste Verbindungsleitung 20 weist eine einzige Abzweigung zu einem Überdruckventil 23 auf, welches über eine Leitung 24 mit einem Drainageventil 25 einer Brüheinheit 26 verbunden ist. Das Drainageventil 23 wiederum ist über eine Leitung 27 mit einem Entspannungsgehäuse 28 verbunden, aus dem Flüssigkeit in eine Tropfschale 29 austreten kann. Die Tropfschale 29 befindet sich in dem gezeigten Ausführungsbeispiel unterhalb eines Tresterbehälters 30. Für mittels der Brüheinheit 26 ausgelaugtes Kaffeepulver.

Wie sich aus dem Fluidschaltplan gemäß Fig. 1 ergibt, wird eine Brühkammer 31 der Brüheinheit 26 von dem ersten Durchlauferhitzer 17 über die Leitung 24 mit heißem Wasser für einen Kaffeebrühprozess versorgt. Der fertige Kaffee wird dann über eine Ausgabeleitung 32 in Richtung Ausgabeeinrichtung 12 ausgegeben.

Zu erkennen ist aus Fig. 1 weiterhin, dass der Ausgang 6 über eine Heißwasserleitung 33 mit einem Heißwasserbezugshahn 34 verbunden ist. Der mit dem Bezugszeichen 4 gekennzeichnete Ausgang ist über eine kombinierte Luft- und Reinigungsleitung 35 mit einer Luftzuführung 36 zum Zuführen von Luft in eine Milchansaugleitung 37 verbunden, welche durch Versorgung der Luft- und Reinigungsleitung 35 mit Wasser und/oder Dampf gereinigt bzw. ausgedampft werden kann. Der mit dem Bezugszeichen 2 gekennzeichnete Ausgang ist über eine Dampfleitung 38 mit einer Milch-Aufschäumeinrichtung 39, genauer mit einem Venturiventil der Milch-Aufschäumvorrichtung 39 zur Erzeugung von Milchschaum und/oder zur Erhitzung von Milch verbunden.

Dabei wird lediglich heiße Milch erzeugt, wenn in einem Betriebsmodus während der Dampfförderung zur Milch-Aufschäumvorrichtung 39 keine Luft über die Luft- und Reinigungsleitung 35 zugeführt wird. Wird dagegen in einem anderen Betriebsmodus durch eine entsprechende Schaltstellung des Mehrwegeventils 21 gleichzeitig Luft zugeführt, wird Milchschaum in an sich bekannter Weise produziert.

Die beiden Durchlauferhitzer 17, 18 können unterschiedlich ausgebildet bzw. angesteuert/konfiguriert sein. In dem gezeigten Ausführungsbeispiel ist es jedenfalls so, dass der erste Durchlauferhitzer 17 eine größere Heizleistung aufweist, hier beispielsweise 1400 Watt als der zweite Durchlauferhitzer 18, hier beispielsweise 1200 oder 1080 Watt.

Der erste Durchlauferhitzer kann grundsätzlich ausschließlich zur Heißwassererzeugung ausgebildet sein oder ausschließlich zur Dampferzeugung oder aber in unterschiedlichen Betriebsmodi zur Erzeugung von Heißwasser und zur Erzeugung von Heißwasser und zur Erzeugung von Heißdampf. Das gleiche gilt auch für den zweiten Durchlauferhitzer 18. Besonders bevorzugt ist eine Konfiguration, bei der mit dem ersten Durchlauferhitzer 17 ausschließlich Heißwasser und mit dem zweiten Durchlauferhitzer 18 ausschließlich Dampf erzeugbar ist.

Mögliche Schaltzustände des Mehrwegeventils 21 sind in den Fig. 2 bis Fig. 9 gezeigt, wobei nicht sämtliche Schaltzustände zwingend realisiert sein müssen und auch weitere Schaltzustände denkbar bzw. zusätzlich realisierbar sind.

Fig. 2 zeigt eine sogenannte Grundstellung des Mehrwegeventils 21. Wie aus Fig. 2 ersichtlich ist, sind in dieser Grundstellung der zweite Ausgang mit dem Entlüftungseingang 7 der zur Luftzuführung 36 führende Ausgang 4 mit dem Entlüftungseingang 9 verbunden.

Fig. 3 zeigt einen Betriebsmodus Entspannung. Die zugehörige Schaltstellung des Mehrwegeventils 21 verbindet den zweiten, fluidleitend mit dem zweiten Durchlauferhitzer 18 verbundenen Eingang 1 über das fakultative Entspannungsgehäuse 28 mit der Tropfschale 29.

Fig. 4 zeigt einen Betriebsmodus Heißwasser mit zugehöriger Schaltstellung. Hier ist der zweite Eingang 1 mit dem über die Heißwasserleitung 33 zum Heißwasserbezugshahn 34 führenden Ausgang 6 verbunden. Die zweite Pumpe 16 fördert Wasser durch den in Betrieb befindlichen zweiten Durchlauferhitzer 18, der Heißwasser produziert, welches dann am Heißwasserbezugshahn 34 unmittelbar entnommen werden kann.

Fig. 5 zeigt einen Vielheißwasser-Betriebsmodus. Hier sind der erste und der zweite Eingang 3, 1 und damit beide Durchlauferhitzer 17, 18 fluidleitend mit dem (gemeinsamen) Ausgang 6 verbunden. Beide Pumpen 15, 16 fördern Wasser durch den jeweils zugehörigen Durchlauferhitzer 17, 18, wobei beide Durchlauferhitzer 17, 18 Heißwasser produzieren und die Heißwasservolumenströme mittels des Mehrwegeventils 21 zusammengeführt und über den gemeinsamen Ausgang 6 und die Heißwasserleitung 33 zum Heißwasserbezugshahn 34 (Zapfstelle bzw. Heißwasserausgang) geleitet werden. Der in Fig. 5 gezeigte Betriebsmodus bzw. die zugehörige Schaltstellung kann auch anders realisiert werden. Hierzu wird mit einem der beiden Durchlauferhitzer Heißwasser und mit dem anderen Durchlauferhitzer Dampf erzeugt und der Dampfvolumenstrom wird dem Heißwasservolumenstrom mittels des Mehrwegeventils 21 zugeleitet, wodurch die Wassertemperatur des Heißwassers des das Heißwasser produzierenden Durchlauferhitzers nochmals erhöht. Bevorzugt wird in diesem Fall die zugehörige Pumpe mit einer höheren Förderleistung betrieben als bei einem Normalwasserbetriebsmodus.

Ganz besonders bevorzugt ist es bei dieser Konfiguration, wenn die beiden Durchlauferhitzer jeweils nur eine Funktion erfüllen können, nämlich der eine Durchlauferhitzer nur Heißwasser produzieren und der andere Durchlauferhitzer nur Dampf erzeugen kann.

In Fig. 6 ist der Betriebsmodus Milcherhitzung gezeigt. Der zweite Eingang 1 ist mit dem Ausgang 2 verbunden, es besteht gleichzeitig keine Verbindung zwischen dem Eingang 5 und dem Ausgang 4. Mittels des zweiten Durchlauferhitzers 18 wird Dampf erzeugt, der zur Milch-Aufschäumeinrichtung 39 bzw. deren Venturidüse geleitet wird, wodurch Milch aus einem Vorratsbehälter über die Milchansaugleitung 37 angesaugt und erhitzt wird.

Fig. 7 zeigt eine Schaltstellung Milchschaumerzeugung. Im Unterschied zu der Darstellung gemäß Fig. 6 ist eine fluidleitende Verbindung zwischen dem Eingang 5 und dem Ausgang 4 hergestellt, so dass während der Milchansaugung gleichzeitig Luft über die Luftzuführung 36 der Milch zugeführt wird.

Fig. 8 zeigt einen Betriebsmodus Luftleitung Ausdampfen. Zu erkennen ist, dass der Eingang 1 des Mehrwegeventils mit dem Ausgang 4 verbunden ist. Nun wird mittels des zweiten Durchlauferhitzers 18 Dampf produziert und der kombinierten Luft- und Reinigungsleitung 35 zugeleitet, um diese Auszudampfen.

Fig. 9 zeigt den Betriebsmodus Luftleitung spülen. Hier ist die Luft- und Reinigungsleitung 35 über den Ausgang 4 mit dem ersten Eingang 3 verbunden. Der erste Durchlauferhitzer 17 produziert Heißwasser.

### Bezugszeichenliste

- 1: zweiter Eingang
- 2: Ausgang
- 3: erster Eingang
- 4: Ausgang
- 5: dritter Eingang
- 6: Ausgang
- 7: Entlüftungseingang
- 8: Ausgang
- 9: Entlüftungseingang
- 11: Getränkezubereitungsvorrichtung
- 12: Ausgabeanordnung
- 13: Wassertank
- 14: Wasserleitung
- 15: erste Pumpe
- 16: zweite Pumpe
- 17: erster Durchlauferhitzer
- 18: zweiter Durchlauferhitzer
- 19: Durchflussmesser
- 20: erste Verbindungsleitung
- 21: Mehrwegeventil
- 22: zweite Verbindungsleitung
- 23: Überdruckventil
- 24: Leitung
- 25: Drainageventil
- 26: Brüheinheit
- 27: Leitung
- 28: Entspannungsgehäuse
- 29: Tropfschale
- 30: Tresterbehälter
- 31: Brühkammer
- 32: Ausgabeleitung
- 33: Heißwasserleitung
- 34: Heißwasserbezugshahn
- 35: Reinigungsleitung
- 36: Luftzuführung
- 37: Milchansaugleitung
- 38: Dampfleitung
- 39: Milch-Aufschäumeinrichtung
- 40: Ausgabeanordung

## Patentansprüche

1. Getränkezubereitungsvorrichtung, insbesondere Kaffeemaschine, mit mindestens einer Wasserpumpe zum Zuführen von Wasser zu einem zum Erzeugen von Heißwasser ausgebildeten ersten Durchlauferhitzer (17) und zu einem ebenfalls zum Erzeugen von Heißwasser und/oder zum Erzeugen von Dampf ausgebildeten zweiten Durchlauferhitzer (18), und mit einer Steuereinheit zum Ansteuern der mindestens einen Pumpe (15, 16) sowie der Durchlauferhitzer (17, 18) zur Realisierung unterschiedlicher Betriebsmodi,
**dadurch gekennzeichnet,**
**dass** der erste Durchlauferhitzer (17) über eine erste Verbindungsleitung (20) mit einem ersten Eingang (3) eines Mehrwegeventils (21) und der zweite Durchlauferhitzer(18) über eine zweite Verbindungsleitung (22) mit einem zweiten Eingang (1) desselben Mehrwegeventils (21) verbunden ist, und dass das Mehrwegeventil (21) derart ausgebildet ist, dass in einer ersten Schaltstellung der erste Eingang (3) und der zweite Eingang (1) mit separaten Ausgängen fluidleitend verbunden sind und in einer zweiten Schaltstellung sowohl der erste Eingang (3) als auch der zweite Eingang (1) fluidleitend mit einem gemeinsamen Ausgang verbunden sind.

2. Getränkezubereitungsvorrichtung nach Anspruch 1,
**dadurch gekennzeichnet,**
**dass** der gemeinsame Ausgang (6) von einem der Ausgänge gebildet ist, die in der ersten Schaltstellung mit einem der Eingänge (3, 1) fluidleitend verbunden ist oder von einem fakultativen weiteren Ausgang.

3. Getränkezubereitungsvorrichtung nach einem der Ansprüche 1 oder 2,
**dadurch gekennzeichnet,**
**dass** das Mehrwegeventil (21) ein Scheibenventil mit relativ zueinander, insbesondere über einen Elektromotor, verdrehbaren Scheiben, insbesondere aus einer Keramik, zur Einstellung unterschiedlicher Schaltstellungen ist.

4. Getränkezubereitungsvorrichtung nach einem der vorhergehenden Ansprüche,
**dadurch gekennzeichnet,**
**dass** das Mehrwegeventil (21) zusätzlich zu dem ersten Eingang (3) und dem zweiten Eingang (1) mindestens einen weiteren Eingang (5), insbesondere einen Lufteingang zum Ansaugen zum Luft für die Herstellung von Milchschaum, und/oder zusätzlich zu den separaten Ausgängen und/oder dem gemeinsamen Ausgang mindestens einen weiteren Ausgang, insbesondere für Luft für die Herstellung von Milchschaum aufweist, wobei bevorzugt in einer Schaltstellung zu Spülzwecken und/oder Ausdampfzwecken der erste und/oder der zweite Eingang (3, 1) mit dem weiteren Ausgang, insbesondere für Luft, verbunden ist.

5. Getränkezubereitungsvorrichtung nach einem der vorhergehenden Ansprüche,
**dadurch gekennzeichnet,**
**dass** die erste Verbindungsleitung (20) abzweigfrei ist, oder dass die erste Verbindungsleitung (20) ausschließlich eine Abzweigung zu einem Überdruckventil (23) und/oder zu einer Brüheinheit zum Auslaugen von Kaffeepulver aufweist.

6. Getränkezubereitungsvorrichtung nach einem der vorhergehenden Ansprüche,
**dadurch gekennzeichnet,**
**dass** die zweite Verbindungsleitung (22) abzweigfrei ist, oder dass die zweite Verbindungsleitung (22) ausschließlich eine Abzweigung zu einem Überdruckventil (23) und/oder zu einer Brüheinheit zum Auslaugen von Kaffeepulver aufweist.

7. Getränkezubereitungsvorrichtung nach einem der vorhergehenden Ansprüche,
**dadurch gekennzeichnet,**
**dass** der erste Durchlauferhitzer (17) ausschließlich zum Erzeugen von Heißwasser ausgebildet ist, oder dass der erste Durchlauferhitzer (17) zwischen einem Heißwassererzeugungsmodus und einem Dampferzeugungsmodus umschaltbar ist.

8. Getränkezubereitungsvorrichtung nach einem der vorhergehenden Ansprüche,
**dadurch gekennzeichnet,**
**dass** der der zweite Durchlauferhitzer (18) ausschließlich zum Erzeugen von Dampf oder ausschließlich zum Erzeugen von Heißwasser ausgebildet ist, oder dass der zweite Durchlauferhitzer (18) zwischen einem Dampferzeugungsmodus und einem Heißwassererzeugungsmodus umschaltbar ist.

9. Getränkezubereitungsvorrichtung nach einem der vorhergehenden Ansprüche,
**dadurch gekennzeichnet,**
**dass** dem ersten Durchlauferhitzer (17) und dem zweiten Durchlauferhitzer (18) jeweils eine Pumpe (15, 16) oder beiden Durchlauferhitzern (17, 18) eine gemeinsame Pumpe zugeordnet ist.

10. Getränkezubereitungsvorrichtung nach Anspruch 9,
**dadurch gekennzeichnet,**
**dass** in mindestens einem Vielheißwasser-Betriebsmodus beide Pumpen (15, 16) bestromt sind, um gleichzeitig beide Durchlauferhitzer (17, 18) mit Wasser zur jeweiligen Erzeugung von Heißwasser zu versorgen, oder dass in mindestens einem Vielheißwassermodus eine einzige Pumpe (15, 16) zur Versorgung beider Durchlauferhitzer (17, 18) mit Wasser zur jeweiligen Erzeugung von Heißwasser mit einer höheren Förderleistung betrieben ist, als in einem Normalheißwasser-Betriebsmodus, in welchem bevorzugt nur einer der Durchlauferhitzer Heißwasser erzeugt.

11. Getränkezubereitungsvorrichtung nach einem der vorhergehenden Ansprüche,
**dadurch gekennzeichnet,**
**dass** in einem ersten Vielheißwasser-Betriebsmodus der erste und der zweite Eingang (3, 1) des Mehrwegeventils (21) mit dem gemeinsamen Ausgang verbunden sind, um einen mit dem gemeinsamen Ausgang verbundenen Verbraucher, insbesondere einen Heißwasserbezugshahn (34), mit Heißwasser zu versorgen, und/ oder dass in einem zweiten Vielheißwasser-Betriebsmodus der erste und der zweite Eingang (3, 1) des Mehrwegeventils (21) mit separaten Ausgängen verbunden sind, um gleichzeitig zwei unterschiedliche Verbraucher, beispielsweise zwei Brüheinheiten oder eine Brüheinheit (26) und einen Heißwasserbezugshahn (34) mit Heißwasser zu versorgen.

12. Getränkezubereitungsvorrichtung nach einem der vorhergehenden Ansprüche,
**dadurch gekennzeichnet,**
**dass** in mindestens einem Heißwasser-Betriebsmodus, in dem der erste und der zweite Eingang (3, 1) des Mehrwegeventils (21) mit separaten Ausgängen oder mit dem gemeinsamen Ausgang verbunden sind, mit dem, vorzugsweise ausschließlich zur Heißwassererzeugung ausgebildeten, ersten Durchlauferhitzer (17) Heißwasser erzeugbar und gleichzeitig mit dem, vorzugsweise ausschließlich zur Dampferzeugung ausgebildeten, zweiten Durchlauferhitzer (18) Dampf erzeugbar ist, um das von dem ersten Durchlauferhitzer (17) auf eine erste Temperatur erhitzte Wasser durch Dampfbeimischung, insbesondere in dem Mehrwegventil (21), auf eine zweite Temperatur zu erhitzen, die höher ist als die erste Temperatur.

13. Getränkezubereitungsvorrichtung nach Anspruch 12,
**dadurch gekennzeichnet,**
**dass** in dem Heißwasserbetriebsmodus der erste Durchlauferhitzer (17) mit einem größeren Heißwasservolumenstrom versorgbar ist, als in einem anderen Betriebsmodus in dem mit dem ersten Durchlauferhitzer (17) ebenfalls Heißwasser erzeugbar ist, wobei in dem anderen Betriebsmodus dem von dem ersten Durchlauferhitzer erzeugten Heißwasser kein Dampf von dem zweiten Durchlauferhitzer zuführbar ist.

14. Getränkezubereitungsvorrichtung nach einem der vorhergehenden Ansprüche,
**dadurch gekennzeichnet,**
**dass** in einem kombinierten Dampf und Heißwasserbetriebsmodus, in dem der erste und der zweite Eingang (3, 1) des Mehrwegeventils (21) mit separaten Ausgängen verbunden sind, mit dem ersten Durchlauferhitzer (17) Heißwasser und mit dem zweiten Durchlauferhitzer (18) Dampf erzeugbar ist, um gleichzeitig einen ersten Verbraucher, insbesondere eine Brüheinheit (26) oder einen Wasserbezugshahn (34), mit Heißwasser und einen weiteren zweiten Verbraucher, insbesondere eine Aufschäumeinrichtung (39) für Milch, mit Dampf zu versorgen.

15. Verfahren zum Betreiben einer Getränkezubereitungsvorrichtung, insbesondere nach einem der vorhergehenden Ansprüche, wobei mit mindestens einer Wasserpumpe, bevorzugt mit jeweils einer Wasserpumpe, Wasser zu einem zum Erzeugen von Heißwasser ausgebildeten ersten Durchlauferhitzer (17) und zu einem ebenfalls zum Erzeugen von Heißwasser und/oder zum Erzeugen von Dampf ausgebildeten zweiten Durchlauferhitzer (18) gefördert wird,
**dadurch gekennzeichnet,**
**dass** der erste Durchlauferhitzer (17) über eine erste Verbindungsleitung (20) mit einem ersten Eingang (3) eines Mehrwegeventils (21) und der zweite Durchlauferhitzer (18) über eine zweite Verbindungsleitung (22) mit einem zweiten Eingang (1) desselben Mehrwegeventils (21) verbunden ist, und dass mit dem Mehrwegeventil (21) in einer ersten Schaltstellung die zum ersten Eingang (3) und zum zweiten Eingang (1) geförderten Fluidströme zusammengeführt und bevorzugt zu einem gemeinsamen Verbraucher geleitet werden, und dass mit dem Mehrwegeventil (21) in einer zweiten Schaltstellung die zum ersten Eingang (3) und zum zweiten Eingang (1) geförderten Fluidströme getrennt voneinander weitergeleitet werden, insbesondere zu unterschiedlichen Verbrauchern.

## Claims

1. A beverage preparation device, in particular a coffee maker, comprising at least one water pump for supplying water to a first continuous-flow heater (17) designed for generating hot water, and to a second continuous-flow heater (18) that is likewise designed for generating hot water and/or for generating steam, and having a control unit for actuating the at least one pump (15, 16) and the continuous-flow heaters (17, 18) for realizing different modes of operation,
**characterized in that**
the first continuous-flow heater (17) is connected by way of a first connecting line (20) to a first input (3) of a multi-way valve (21), and by way of a second connecting line (22), the second continuous-flow heater (18) is connected to a second input (1) of the same multi-way valve (21), and that the multi-way valve (21) is designed such that in a first switching position, the first input (3) and the second input (1) are fluidically connected to separate outputs and in a second switching position, both the first input (3) and the second input (1) are fluidically connected to a common output.

2. The beverage preparation device according to Claim 1,
**characterized in that**
the common output (6) is formed by one of the outputs which is fluidically connected to one of the inputs (3, 1) in the first switching position or by an optional further ouput.

3. The beverage preparation device according to one of Claims 1 or 2,
**characterized in that**
the multi-way valve (21) is a disc valve with discs which are rotatable relative to one another, in particular via an electric motor, said discs being in particular made of a ceramic, for adjusting different switching positions.

4. The beverage preparation device according to one of the preceding claims,
**characterized in that**
the multi-way valve (21), in addition to the first input (3) and the second input (1), has at least one further input (5), in particular an air input for the intake of air for the production of milk froth, and/or in addition to the separate outputs and/or the common output, at least one further output, in particular for air for the production of milk froth, wherein preferably in a switching position for flushing purposes and/or for evaporation purposes the first and/or the second input (3, 1) is connected to the further output, in particular for air.

5. The beverage preparation device according to one of the preceding claims,
**characterized in that**
the first connecting line (20) is free of branches, or that the first connecting line (20) has exclusively one branch to a pressure relief valve (23) and/or to a brewing unit for the steeping of ground coffee.

6. The beverage preparation device according to one of the preceding claims,
**characterized in that**
the second connecting line (22) is free of branches, or that the second connecting line (22) has exclusively one branch to a pressure relief valve (23) and/or to a brewing unit for the steeping of ground coffee.

7. The beverage preparation device according to one of the preceding claims,
**characterized in that**
the first continuous-flow heater (17) is embodied exclusively for the generating of hot water, or that the first continuous-flow heating (17) is able to be switched between a hot water generating mode and a steam generating mode.

8. The beverage preparation device according to one of the preceding claims,
**characterized in that**
the second continuous-flow heater (18) is embodied exclusively for the generating of steam or exclusively for the generating of hot water, or that the second continuous-flow heater (18) is able to be switched between a steam generating mode and a hot water generating mode.

9. The beverage preparation device according to one of the preceding claims,
**characterized in that**
a pump (15, 16) is respectively associated with the first continuous-flow heater (17) and the second continuous-flow heater (18), or a common pump is associated with both continuous-flow heaters (17, 18).

10. The beverage preparation device according to Claim 9,
**characterized in that**
in at least one multi hot water operating mode, both pumps (15, 16) are energized, in order to simultaneously supply both continuous-flow heaters (17, 18) with water for the respective production of hot water, or that in at least one multi hot water mode a single pump (15, 16) for the supply of both continuous-flow heaters (17, 18) with water for the respective generating of hot water is operated with a higher delivery rate than in a normal hot water operating mode, in which preferably only one of the continuous-flow heaters generates hot water.

11. The beverage preparation device according to one of the preceding claims,
**characterized in that**
in a first multi hot water operating mode, the first and the second input (3, 1) of the multi-way valve (21) are connected to the common output, in order to supply a consumer, connected to the common output, in particular a hot water delivery tap (34), with hot water, and/or that in a second multi hot water operating mode, the first and the second input (3, 1) of the multi-way valve (21) are connected to separate outputs, in order to simultaneously supply two different consumers, for example two brewing units or one brewing unit (26) and one hot water delivery tap (34), with hot water.

12. The beverage preparation device according to one of the preceding claims,
**characterized in that**
in at least one hot water operating mode, in which the first and the second input (3, 1) of the multi-way valve (21) are connected with separate outputs or with the common output, hot water is able to be generated with the first continuous-flow heater (17), preferably embodied exclusively for generating hot water, and at the same time steam is able to be generated with the second continuous-flow heater (18), preferably embodied exclusively for generating steam, in order to heat the water, heated to a first temperature by the first continuous-flow heater (17), by the admixture of steam, in particular in the multi-way valve (21), to a second temperature, which is higher than the first temperature.

13. The beverage preparation device according to Claim 12,
**characterized in that**
in the hot water mode of operation, the first continuous-flow heater (17) is able to be supplied with a greater hot water volume flow than in another mode of operation, in which hot water is likewise able to be produced with the first continuous-flow heater (17), wherein in the other mode of operation no steam is able to be fed from the second continuous-flow heater to the hot water generated by the first continuous-flow heater.

14. The beverage preparation device according to one of the preceding claims,
**characterized in that**
in a combined steam and hot water mode of operation, in which the first and the second input (3, 1) of the multi-way valve (21) are connected to separate outputs, hot water is able to be generated with the first continuous-flow heater (17) and steam is able to be generated with the second continuous-flow heater (18), in order to simultaneously supply a first consumer, in particular a brewing unit (26) or a water delivery tap (34), with hot water, and a further second consumer, in particular a frothing device (39) for milk, with steam.

15. A method for operating a beverage preparation device, in particular according to one of the preceding claims, wherein with at least one water pump, preferably with respectively one water pump, water is conveyed to a first continuous-flow heater (17) embodied for the generating of hot water, and to a second continuous-flow heater (18), likewise embodied for the generating of hot water and/or for the generating of steam,
**characterized in that**
the first continuous-flow heater (17) is connected via a first connecting line (20) to a first input (3) of a multi-way valve (21) and the second continuous-flow heater (18) is connected via a second connecting line (22) to a second input (1) of the same multi-way valve (21), and that with the multi-way valve (21) in a first switching position the fluid flows conveyed to the first input (3) and to the second input (1) are brought together and are preferably directed to a common consumer, and that with the multi-way valve (21) in a second switching position the fluid flows conveyed to the first input (3) and to the second input (1) are passed on separately from one another, in particular to different consumers.

## Revendications

1. Dispositif de préparation de boissons, en particulier machine à café, avec au moins une pompe à eau pour fournir de l'eau à un premier chauffe-eau continu (17) configuré pour produire de l'eau chaude et à un deuxième chauffe-eau continu (18) également configuré pour produire de l'eau chaude et/ou pour produire de la vapeur, et avec une unité de commande permettant de commander ladite au moins une pompe (15, 16) ainsi que les chauffe-eau continus (17, 18) afin de réaliser différents modes de fonctionnement,
**caractérisé en ce que** le premier chauffe-eau continu (17) est raccordé au moyen d'une première conduite de raccordement (20) à une première entrée (3) d'une vanne à plusieurs voies (21) et le deuxième chauffe-eau continu (18) est raccordé par une deuxième conduite de raccordement (22) à une deuxième entrée (1) de la même vanne à plusieurs voies (21), et **en ce que** la vanne à plusieurs voies (21) est configurée de telle manière que dans une première position de commutation la première entrée (3) et la deuxième entrée (1) soient raccordées en liaison fluidique à des sorties séparées et que dans une deuxième position de commutation aussi bien la première entrée (3) que la deuxième entrée (1) soient raccordées en liaison fluidique à une sortie commune.

2. Dispositif de préparation de boissons selon la revendication 1, **caractérisé en ce que** la sortie commune (6) est formée par une des sorties, qui dans la première position de commutation est raccordée en liaison fluidique à une des entrées (3, 1) ou par une autre sortie facultative.

3. Dispositif de préparation de boissons selon une des revendications 1 ou 2, **caractérisé en ce que** la vanne à plusieurs voies (21) est une vanne à disques avec des disques, en particulier en une céramique, qui peuvent tourner l'un par rapport à l'autre, en particulier au moyen d'un moteur électrique, pour le réglage de différentes positions de commutation.

4. Dispositif de préparation de boissons selon l'une quelconque des revendications précédentes, **caractérisé en ce que** la vanne à plusieurs voies (21) présente, en plus de la première entrée (3) et de la deuxième entrée (1), au moins une autre entrée (5), en particulier une entrée d'air pour aspirer de l'air pour la production d'une mousse de lait, et/ou en plus des sorties séparées et/ou de la sortie commune au moins une autre sortie, en particulier pour de l'air destiné à produire une mousse de lait, dans lequel la première et/ou la deuxième entrée (3, 1) est raccordée à l'autre sortie, en particulier pour l'air, de préférence dans une position de commutation prévue dans un but de rinçage et/ou dans un but d'évacuation de vapeur.

5. Dispositif de préparation de boissons selon l'une quelconque des revendications précédentes, **caractérisé en ce que** la première conduite de raccordement (20) ne comporte pas de branchement, ou **en ce que** la première conduite de raccordement (20) présente exclusivement un branchement vers une soupape de surpression (23) et/ou vers une unité de percolation pour l'infusion de poudre de café.

6. Dispositif de préparation de boissons selon l'une quelconque des revendications précédentes, **caractérisé en ce que** la deuxième conduite de raccordement (22) ne comporte pas de branchement, ou **en ce que** la deuxième conduite de raccordement (22) présente exclusivement un branchement vers une soupape de surpression (23) et/ou vers une unité de percolation pour l'infusion de poudre de café.

7. Dispositif de préparation de boissons selon l'une quelconque des revendications précédentes, **caractérisé en ce que** le premier chauffe-eau continu (17) est configuré exclusivement pour la production d'eau chaude, ou **en ce que** le premier chauffe-eau continu (17) peut être commuté entre un mode de production d'eau chaude et un mode de production de vapeur.

8. Dispositif de préparation de boissons selon l'une quelconque des revendications précédentes, **caractérisé en ce que** le deuxième chauffe-eau continu (18) est configuré exclusivement pour la production de vapeur ou exclusivement pour la production d'eau chaude, ou **en ce que** le deuxième chauffe-eau continu (18) peut être commuté entre un mode de production de vapeur et un mode de production d'eau chaude.

9. Dispositif de préparation de boissons selon l'une quelconque des revendications précédentes, **caractérisé en ce qu'**une pompe (15, 16) est respectivement associée au premier chauffe-eau continu (17) et au deuxième chauffe-eau continu (18) ou une pompe commune est associée aux deux chauffe-eau continus (17, 18).

10. Dispositif de préparation de boissons selon la revendication 9, **caractérisé en ce que**, dans au moins un mode de fonctionnement produisant beaucoup d'eau chaude, les deux pompes (15, 16) sont activées afin d'alimenter en eau simultanément les deux chauffe-eau continus (17, 18) pour la production respective d'eau chaude, ou **en ce que**, dans au moins un mode de fonctionnement produisant beaucoup d'eau chaude, une seule pompe (15, 16) est utilisée pour l'alimentation en eau des deux chauffe-eau continus (17, 18) pour la production respective d'eau chaude avec un débit plus élevé que dans un mode de fonctionnement normal de production d'eau chaude, dans lequel de préférence un seul des chauffe-eau continus produit de l'eau chaude.

11. Dispositif de préparation de boissons selon l'une quelconque des revendications précédentes, **caractérisé en ce que**, dans un premier mode de fonctionnement produisant beaucoup d'eau chaude, la première et la deuxième entrées (3, 1) de la vanne à plusieurs voies (21) sont raccordées à la sortie commune, afin d'alimenter en eau chaude un consommateur raccordé à la sortie commune, en particulier un robinet de prélèvement d'eau chaude (34), et/ou **en ce que**, dans un deuxième mode de fonctionnement produisant beaucoup d'eau chaude, la première et la deuxième entrées (3, 1) de la vanne à plusieurs voies (21) sont raccordées à des sorties séparées, afin d'alimenter simultanément en eau chaude deux consommateurs différents, par exemple deux unités de percolation ou une unité de percolation (26) et un robinet de prélèvement d'eau chaude (34).

12. Dispositif de préparation de boissons selon l'une quelconque des revendications précédentes, **caractérisé en ce que**, dans au moins un mode de fonctionnement produisant de l'eau chaude, dans lequel la première et la deuxième entrées (3, 1) de la vanne à plusieurs voies (21) sont raccordées à des sorties séparées ou à la sortie commune, de l'eau chaude peut être produite avec le premier chauffe-eau continu (17) configuré de préférence exclusivement pour la production d'eau chaude et en même temps de la vapeur peut être produite avec le deuxième chauffe-eau continu (18) configuré de préférence exclusivement pour la production de vapeur, afin de chauffer l'eau chauffée à une première température par le premier chauffe-eau continu (17), par adjonction de vapeur, en particulier dans la vanne à plusieurs voies (21) à une deuxième température qui est plus élevée que la première température.

13. Dispositif de préparation de boissons selon la revendication 12, **caractérisé en ce que**, dans le premier mode de fonctionnement produisant de l'eau chaude, le premier chauffe-eau continu (17) peut être alimenté avec un courant volumique d'eau chaude plus élevé que dans un autre mode de fonctionnement dans lequel de l'eau chaude peut également être produite avec le premier chauffe-eau continu (17), dans lequel dans l'autre mode de fonctionnement il n'est pas possible de fournir de la vapeur du deuxième chauffe-eau continu à l'eau chaude produite par le premier chauffe-eau continu.

14. Dispositif de préparation de boissons selon l'une quelconque des revendications précédentes, **caractérisé en ce que**, dans un mode de fonctionnement combiné produisant de la vapeur et de l'eau chaude, dans lequel la première et la deuxième entrées (3, 1) de la vanne à plusieurs voies (21) sont raccordées à des sorties séparées, il est possible de produire de l'eau chaude avec le premier chauffe-eau continu (17) et de la vapeur avec le deuxième chauffe-eau continu (18), afin d'alimenter simultanément en eau chaude un premier consommateur, en particulier une unité de percolation (26) ou un robinet de prélèvement d'eau (34) et en vapeur un deuxième consommateur supplémentaire, en particulier un système de moussage (39) pour du lait.

15. Procédé de fonctionnement d'un dispositif de préparation de boissons, en particulier selon l'une quelconque des revendications précédentes, dans lequel on envoie avec au moins une pompe à eau, de préférence avec une pompe à eau respective, de l'eau à un premier chauffe-eau continu (17) configuré pour produire de l'eau chaude et à un deuxième chauffe-eau continu (18) également configuré pour produire de l'eau chaude et/ou pour produire de la vapeur,
**caractérisé en ce que** le premier chauffe-eau continu (17) est raccordé au moyen d'une première conduite de raccordement (20) à une première entrée (3) d'une vanne à plusieurs voies (21) et le deuxième chauffe-eau continu (18) est raccordé par une deuxième conduite de raccordement (22) à une deuxième entrée (1) de la même vanne à plusieurs voies (21), et **en ce que**, avec la vanne à plusieurs voies (21) dans une première position de commutation, on réunit les courants de fluide transportés vers la première entrée (3) et vers la deuxième entrée (1) et on les conduit de préférence vers un consommateur commun, et **en ce que**, avec la vanne à plusieurs voies (21) dans une deuxième position de commutation, on conduit séparément l'un de l'autre, en particulier vers des consommateurs différents, les courants de fluide transportés vers la première entrée (3) et vers la deuxième entrée (1).
